(19) Europäisches Patentamt / European Patent Office / Office européen des brevets

(11) **EP 1 777 695 B1**

(12) **FASCICULE DE BREVET EUROPEEN**

(45) Date de publication et mention
de la délivrance du brevet:
**10.10.2012 Bulletin 2012/41**

(51) Int Cl.:
***G06T 3/40*** (2006.01)

(21) Numéro de dépôt: **06291627.5**

(22) Date de dépôt: **19.10.2006**

(54) **Procédé pour redimensionner un objet graphique**

Process to resize a graphical object

Verfahren zum Umskalieren eines grafischen Objekts

(84) Etats contractants désignés:
**AT BE BG CH CY CZ DE DK EE ES FI FR GB GR HU IE IS IT LI LT LU LV MC NL PL PT RO SE SI SK TR**
Etats d'extension désignés:
**AL BA HR MK RS**

(30) Priorité: **21.10.2005 FR 0510791**

(43) Date de publication de la demande:
**25.04.2007 Bulletin 2007/17**

(73) Titulaire: **Intuilab**
**31672 Labege Cedex (FR)**

(72) Inventeurs:
• **Dragicevic, Pierre**
**c/o INTUILAB**
**31672 Labege Cedex (FR)**
• **Chatty, Stéphane**
**31400 Toulouse (FR)**
• **Thevenin, David**
**31300 Toulouse (FR)**

(74) Mandataire: **Pontet, Bernard et al**
**Pontet Allano & Associés s.e.l.a.r.l.**
**25, rue Jean Rostand**
**Parc Club Orsay Université**
**91893 Orsay Cedex (FR)**

(56) Documents cités:
**US-A1- 2004 263 537**

• **KURLANDER D ET AL: "INFERRING CONSTRAINTS FROM MULTIPLE SNAPSHOTS" ACM TRANSACTIONS ON GRAPHICS, ACM, vol. 12, no. 4, 1 octobre 1993 (1993-10-01), pages 277-304, XP000418059 ISSN: 0730-0301**
• **MYERS B A ET AL: "MARQUISE: CREATING COMPLETE USER INTERFACES BY DEMONSTRATION" BRIDGES BETWEEN WORLDS. AMSTERDAM, APR. 24 - 29, 1993; [PROCEEDINGS OF THE CONFERENCE ON HUMAN FACTORS IN COMPUTING SYSTEMS. (INTERCHI)], READING, ADDISON WESLEY, US, vol. -, 24 avril 1993 (1993-04-24), pages 293-300, XP000473776**
• **MARRIOTT K ET AL: "Fast and Efficient Client-Side Adaptivity for SVG" INTERNATIONAL WORLD WIDE WEB CONFERENCE, XX, XX, 7 mai 2005 (2005-05-07), pages 496-507, XP002381113**
• **HUDSON S E AN MOHAMED S P: "Interactive Specification of Flexible User Interface Displays" ACM TRANSACTIONS ON INFORMATION SYSTEMS, ACM, NEW YORK, NY, US, vol. 8, no. 3, 1 juillet 1990 (1990-07-01), pages 269-288, XP002381114 ISSN: 1046-8188**

**Description**

La présente invention concerne un procédé pour redimensionner un objet graphique structuré, de préférence objet graphique vectoriel, de façon à obtenir un objet graphique intermédiaire de taille différente.

D'une façon générale, il existe de plus en plus de solutions disponibles pour les graphistes pour directement élaborer un graphisme pour des applications visuelles sans que cela nécessite la traduction, par un programmeur, de leur travail en code informatique. Par exemple, Macromedia Director® permet à des graphistes d'établir des applications simples de multimédia. Le HTML et les éditeurs "Flash" leur permettent de construire des pages Web et des graphismes pour des applications Web. Plus récemment, IntuiKit® propose une solution pour fusionner des graphismes avec des composants logiciels traditionnels de plus grandes applications, voir notamment le document : S. Chatty, S. Sire, J. Vinot, P. Lecoanet, C. Mertz, et A. Lemort; "Revisiting visual interface programming: Creating GUI tools for designers and programmers." Dans Proceedings of the ACMUIST, pages 267-276; Addison-Wesley, Oct. 2004. Cependant, beaucoup de graphistes sont disposés à aller plus loin et à prendre plus de contrôle dans la programmation des interfaces utilisateurs. Une fois utilisés dans une application interactive, leur graphisme est souvent adapté pour refléter des changements de contexte ou des variations de données, et le contrôle de ces changements devrait faire partie de leur travail. En particulier, certains graphistes souhaiteraient contrôler l'agencement visuelle et ses changements.

En effet, une fois impliqués dans la conception visuelle des interfaces utilisateurs graphiques, les graphistes peuvent faire plus que fournir simplement un graphisme statique à des programmeurs qui vont ensuite l'incorporer dans des applications. Ils sont disposés à décrire des contraintes sur la façon dont les visuels devraient être modifiés une fois adaptés à une nouvelle taille ou une fois utilisés pour représenter des données dynamiques.

Un certain nombre de techniques automatisées sont disponibles pour contrôler l'agencement des interfaces visuelles. Elles s'étendent de la simple remise à l'échelle des objets graphiques à une optimisation plus complexe et à des algorithmes de résolution de contraintes. Cependant, la plupart des techniques sont destinées aux programmeurs et ne fournissent pas un niveau de contrôle suffisamment élevé pour les graphistes. Elles ne tiennent pas compte du fait que l'oeil est un instrument subjectif et que des déformations doivent être appliquées aux objets afin de créer une illusion de remise à l'échelle sans heurt. En conséquence, les graphistes doivent choisir entre accepter une remise à l'échelle sous-optimale des objets, fournissant un graphisme pour chaque taille prévue, ou demander aux programmeurs d'élaborer une fonction spécifique pour chaque objet.

On connaît le document "Inferring constraints from multiple snapshots", D. Kurlander and S. Feiner. ACM Trans. Graph., 12(4):277-304, 1993, qui décrit un système, "Chimera system", permettant de déduire, à partir de plusieurs graphismes, des invariants géométriques tels que des incidences, des distances relatives et des pentes. Cependant, ce système peut impliquer des contraintes excessives ou des règles fortuites, ce qui nécessite parfois d'élaborer un grand nombre d'exemples pour évacuer toute contrainte indésirable. En outre, la recherche étendue des invariants est un processus coûteux.

L'un des problèmes techniques que la présente invention se propose de résoudre, est que le redimensionnement des objets graphiques actuels peut aboutir à des objets graphiques redimensionnés dans lesquels le contenu informatif n'est plus visible, donc accessible.

La présente invention a pour but de remédier aux inconvénient précités en proposant un procédé de redimensionnement simplifié, rapide et applicable à des graphismes vectoriels.

On atteint au moins l'un des objectifs précités avec un Procédé pour redimensionner un objet graphique structuré, de préférence un objet graphique vectoriel, de façon à obtenir un objet graphique intermédiaire de taille différente, ce procédé comprenant les étapes suivantes :

- élaboration d'une pluralité de reproductions dudit objet graphique, chaque reproduction présentant un dimensionnement donné,
- extraction d'un ensemble de matrices de transformation affine pour chaque reproduction,
- application d'une interpolation orthogonale sur les matrices de transformations affines de façon à déduire des matrices intermédiaires de transformation affine pour tout objet graphique intermédiaire de taille différente de celle desdites reproductions; ladite interpolation orthogonale consistant en une interpolation séparée de la première ligne des matrices de transformation selon au moins la largeur, et de la deuxième ligne des matrices de transformation selon au moins la hauteur; et
- déduction des caractéristiques géométriques dudit objet graphique intermédiaire à partir des matrices intermédiaires.

La présente invention s'applique principalement sur des graphismes structurés, c'est à dire des graphismes avec des primitives dotées de transformations affines et non sur des graphismes bitmap.

D'une façon générale, une transformation affine est caractérisée par une matrice homogène comportant six coefficients.

La présente invention se distingue clairement des algorithmes existants d'interpolation d'une seule matrice globale consistant à un redimensionnement naïf de type remise à l'échelle. En effet, selon l'invention chaque reproduction est dotée de plusieurs matrices de transformations, une par primitive graphique. On extrait cet ensemble de matrices pour chaque exemple et on les interpole deux à deux, par exemple, si le graphisme est constitué d'un triangle et d'un carré, on interpole la matrice associée au triangle de la reproduction 1 avec celle associée au triangle de la reproduction 2, puis on fait de même avec la matrice associée au carré. Interpoler plusieurs matrices permet de générer des déformations locales.

La présente invention est notamment remarquable par le fait que les variables d'interpolation comprennent au moins la largeur et la hauteur de l'objet graphique intermédiaire recherché. Contrairement aux algorithmes existants utilisés notamment dans le domaine des animations (flash, par exemple), on utilise ici la dimension comme variable d'entrée et non pas le temps.

L'interpolation orthogonale consiste à réaliser uniquement des interpolations linéaires entre, d'une part les largeurs des reproductions et la première ligne des matrices de transformation affine, et d'autre part les hauteurs des reproductions et la seconde ligne des matrices de transformation affine. En fait, l'interpolation génère une fonction pour laquelle le domaine de départ est bidimensionnel et comprend la largeur et la hauteur, et le domaine d'arrivé est constitué des matrices de transformation.

En fait, chaque reproduction est une copie déformée de l'objet graphique, et cette reproduction est visuellement acceptable par l'homme du métier. On élabore donc un nombre limité de reproductions à des tailles différentes. Les dimensionnements intermédiaires vont être déduits par algorithme. La présente invention peut donc être scindée en deux grandes étapes : une première étape d'élaboration de copies à des tailles données, puis une seconde étape de détermination dudit objet graphique à des tailles différentes.

Avec la présente invention, les objets graphiques peuvent être modifiés tout en respectant un certain nombre de contraintes notamment basées sur les reproductions prédéfinies. Ces reproductions prédéfinies sont comme des jalons traçant un chemin qui est obligatoirement emprunté par toute modification de l'objet graphique. Ainsi, chaque modification de l'objet graphique aboutit à un objet graphique qui est visuellement acceptable.

Par ailleurs, la présente invention peut avantageusement s'appliquer aux objets définis par des fichiers au format SVG ("scalable vector graphics").

Elle peut s'intégrer à des outils de conception actuels et permettre à l'homme du métier qui peut être un graphiste d'avoir une part importante, vis à vis d'un programmeur, dans la conception d'une application graphique par exemple.

Par rapport notamment au document de Chimera, la présente invention aborde une approche complètement nouvelle. En effet, au lieu de rechercher explicitement des invariants comme dans Chimera, on utilise une technique simple d'interpolation qui préserve des invariants comme conséquence normale de ses propriétés mathématiques. L'un des avantages est que les calculs de redimensionnement sont très rapides, même avec des vecteurs graphiques extrêmement complexes.

Ladite interpolation peut être de type polynomial, mais de préférence elle est de type linéaire par morceaux. En fait, il s'agit d'un algorithme linéaire lorsque appliqué à deux reproductions. Mais lorsque le nombre de reproductions est supérieur à deux, on utilise l'interpolation linéaire par morceaux ("piecewise linear" en langue anglaise). D'une façon générale, chaque reproduction présente une structure arborescente semblable à celle de l'objet graphique initial. Chaque reproduction comporte donc le même nombre de primitives graphiques, donc le même nombre de matrices de transformation. L'interpolation linéaire par morceaux permet de considérer les matrices disposées dans des emplacements identiques de l'arborescence de chaque reproduction, et ce deux par deux.

En d'autres termes, si l'on prend une transformation T comme fonction d'un scalaire t représentant, par exemple le temps. On note t la variable d'entrée et T la variable de sortie. On suppose connus les deux points (t1,T1) et (t2,T2). Les techniques d'interpolation permettent de déduire la matrice T pour chaque t compris entre t1 et t2, la plus simple de ces techniques est l'interpolation linéaire de la matrice des coefficients. L'homme du métier comprendra aisément que l'on parle de techniques d'interpolation lorsque l'on recherche un point compris entre deux points prédéterminés, et que l'on désignera par techniques d'extrapolation lorsque l'on recherche un point non compris entre deux points prédéterminés.

Dans le domaine des graphismes vectoriels, la géométrie est généralement décrite par des transformations affines. De telles transformations sont par exemple une translation et une mise à l'échelle, utiles pour le codage de l'emplacement et de la taille des primitives graphiques, aussi bien qu'une rotation et un cisaillement. Les transformations affines sont dans la plupart des cas formulés en utilisant des coordonnées homogènes de sorte que les six coefficients qui caractérisent la transformation puissent être regroupés dans une seule matrice T de transformation :

$$\begin{bmatrix} x' \\ y' \\ 1 \end{bmatrix} = \underbrace{\begin{bmatrix} a^{11} & a^{12} & a^{13} \\ a^{21} & a^{22} & a^{23} \\ 0 & 0 & 1 \end{bmatrix}}_{T} \begin{bmatrix} x \\ y \\ 1 \end{bmatrix}$$

L'interpolation orthogonale selon l'invention permet de simplifier les calculs et d'accélérer le traitement. En effet, lorsqu'on est en présence de plus de deux reproductions, en appliquant l'interpolation orthogonale, on fait une hypothèse simplificatrice qui ramène le calcul au cas de deux interpolations linéaires monovariées. Cette hypothèse est que la largeur agit seulement sur les trois coefficients de la matrice de transformation qui contribuent à la coordonnée x d'un point transformé (la première ligne de la matrice). De la même manière, les trois coefficients sur la deuxième ligne sont linéairement interpolés avec la hauteur. Cette technique simple d'interpolation de transformation est donc appelée interpolation orthogonale.

Encore plus précisément, avec la définition mathématique de l'interpolation orthogonale, on peut introduire la notion de compatibilité entre des exemples (des reproductions) en terme d'interpolation orthogonale.

Définition 1 : on définit un exemple comme étant un couple E=(w, h,T), où $E \in \mathfrak{R}$ et T est une matrice de transformation 2-D.

Définition 2 : deux exemples E1=(w1,h1,T1) et E2=(w2,h2,T2) sont dits compatibles en terme d'interpolation orthogonale lorsque :

$$w1 = w2 \Rightarrow \left\{ a_1^{1j} = a_2^{1j} \right\} j \in [1,3]$$

et

$$h1 = h2 \Rightarrow \left\{ a_1^{2j} = a_2^{2j} \right\} j \in [1,3]$$

où $a_1^{ij}$ et $a_2^{ij}$ sont des coefficients des matrices T1 et T2 respectivement.

Définition 3 : soit E1=(w1,h1,T1) et E2=(w2,h2,T2) deux exemples compatibles. L'interpolant orthogonal de E1 et E2 est la fonction :

$$I_{E1,E2}^{orth} : (w,h) \mapsto T = \begin{bmatrix} I_{(w1,a_1^{11}),(w2,a_2^{11})}^{lin}(w) & I_{(w1,a_1^{12}),(w2,a_2^{12})}^{lin}(w) & I_{(w1,a_1^{13}),(w2,a_2^{13})}^{lin}(w) \\ I_{(h1,a_1^{21}),(h2,a_2^{21})}^{lin}(h) & I_{(h1,a_1^{22}),(h2,a_2^{22})}^{lin}(h) & I_{(h1,a_1^{23}),(h2,a_2^{23})}^{lin}(h) \\ 0 & 0 & 1 \end{bmatrix}$$

où :

- $I_{(x1,y1),(x2,y2)(x)}^{lin}$ est l'"interpolant linéaire de (x1,y1) et (x2,y2), c'est à dire, la fonction

- $(x,y) \mapsto \dfrac{(x2-x)y1 + (x-x1)y2}{x2-x1}$ si x1≠x2 et (x,y)→y1 sinon.

- - $a_1^{ij}$ et $a_2^{ij}$ sont des coefficients des matrices T1 et T2 respectivement.

La définition peut être généralisée à plus de deux exemples, c'est à dire étendue à $I_{E1,...,En}^{orth}$, en remplaçant

$I^{lin.}$ par l'interpolant linéaire par morceaux.

Lorsque l'interpolation orthogonale est appliquée sur des transformations affines , on peut introduire des objets géométriques concrets, c'est à dire des points, des lignes, des formes, pour comprendre son effet sur les objets graphiques. La déduction des formes géométriques est réalisée de façon conventionnelle en appliquant, en local, les matrices obtenues par interpolation orthogonale sur l'une des reproductions.

Selon l'invention, pour deux reproductions dont les matrices de transformation affine sont T1 et T2, on note $I_{T1,T2}$ un interpolant orthogonal permettant de générer une famille de matrices de transformations intermédiaires (il y a autant d'interpolants que de valeurs de w1,h1,w2,h2); et pour P1, P2 et P des points obtenus par transformation d'un même point du plan via T1, T2 et la transformation intermédiaire $I_{T1,T2}$ respectivement, on déduit P(x,y) à partir de P1 (x1,y1) et P2(x2,y2) en utilisant la formule suivante :

$$P(x, y) = (I^{lin}_{(w1,x1),(w2,x2)}(w), I^{lin}_{(h1,y1),(h2,y2)}(h))$$

avec

$$I_{T1,T2} = I^{orth}_{(w1,h1,T1),(w2,h2,T2)} ,$$

c'est à dire une interpolation orthogonale ayant comme sortie des matrices T, et comme variables des largeurs w et des hauteurs h.

Ainsi, on voit que P résulte simplement de la double interpolation linéaire de P1 et P2 selon l'axe x et l'axe y séparément.

D'autres avantages et caractéristiques de l'invention apparaîtront à l'examen de la description détaillée d'un mode de mise en oeuvre nullement limitatif, et des dessins annexés, sur lesquels :

- La figure 1 est une vue de trois reproductions d'un objet graphique;
- La figure 2 est un organigramme illustrant des étapes successives mises en oeuvre dans la présente invention;
- Les figures 3a et 3b illustrent le redimensionnement d'objet graphique selon l'art antérieur;
- La figure 3c illustre le redimensionnement d'un objet graphique selon la présente invention;
- La figure 4 est une spécification de type SVG de l'objet graphique de la figure 3c;
- La figure 5 illustre une interprétation géométrique de l'interpolation orthogonale; et
- Les figures 6a à 6e illustrent les propriétés conservatives d'une interpolation orthogonale.

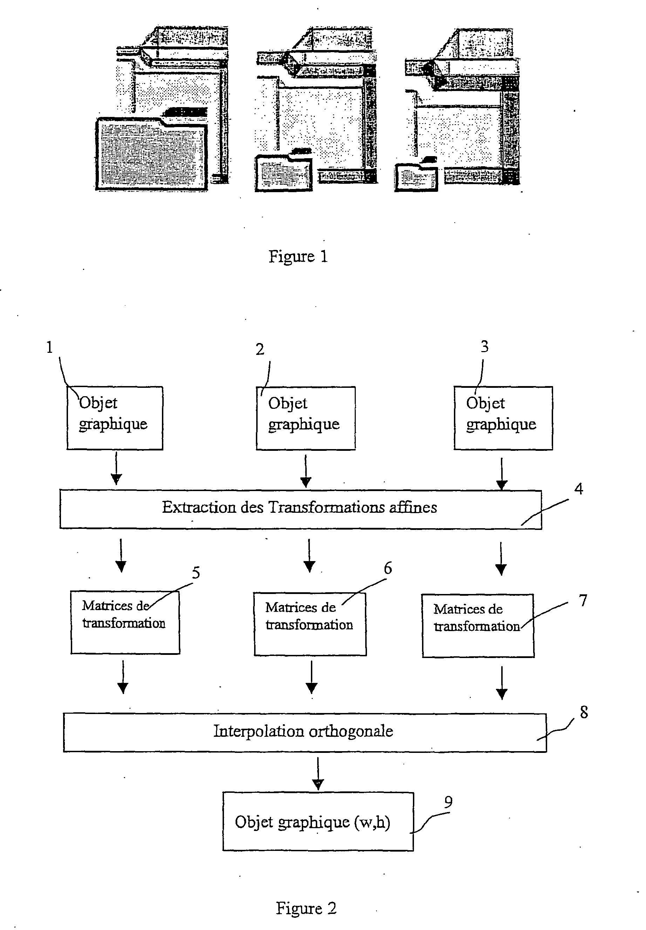

Sur la figure 1, on voit trois reproductions qui sont des copies d'un objet graphique. Chaque copie est de taille différente et a été élaborée de façon à ce qu'elle soit visuellement acceptable, c'est à dire que des éléments essentiels restent distinctifs. Ces reproductions sont des copies clés à partir desquelles le procédé selon l'invention est mis en oeuvre. Sur la figure 2, on extrait à l'étape 4, pour chaque copies 1, 2 et 3, un ensemble de matrices de transformation affine 5, 6 et 7 respectivement. Ensuite, on applique une interpolation orthogonale à l'étape 8 sur l'ensemble des matrices de transformation affine. Le résultat est une fonction qui pour une largeur et une hauteur données fournit les matrices de transformation affine correspondant à l'objet graphique 9 de dimension respectant lesdites largeur et hauteur données.

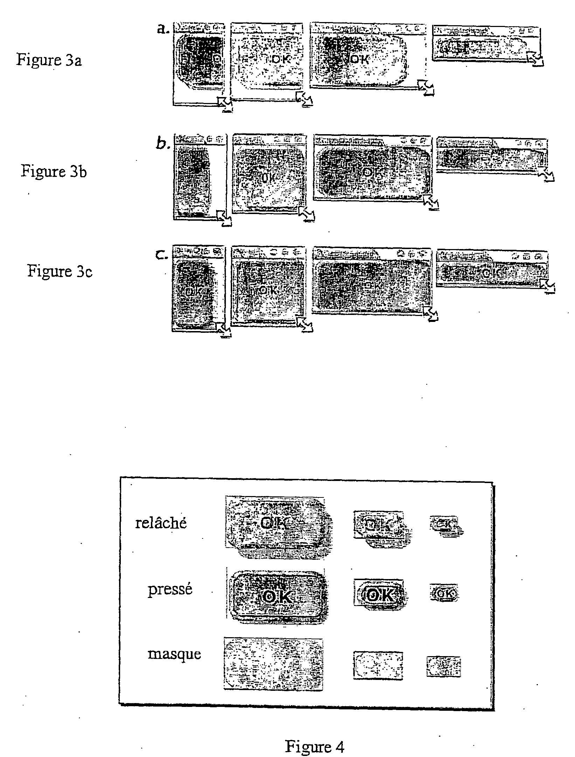

On voit sur les figures 3a et 3b le redimensionnement d'un objet graphique selon l'art antérieur. On remarque que les éléments essentiels, comme le "OK", ne restent pas distinctifs quel que soit la taille de l'objet graphique. Alors que sur la figure 3c selon la présente invention, les copies clés ont été élaborées de telle sorte que le "OK" reste visible pour toute taille de l'objet graphique. Sur cette figure 3c, on a préservé et respecté les contraintes liées au texte, la largeur des bordures et les contours des rectangles. Les spécifications SVG de l'objet de la figure 3c sont représentées sur la figure 4 avec trois parties d'un bouton et leur boîte limite. Pour une même rangée, les boutons de différentes tailles ont été élaborés de telle sorte que chacun d'eux apparaît visuellement acceptable pour l'homme du métier, un graphiste par exemple. Ces critères de visibilité acceptable peuvent être aisément fixés par l'homme du métier. Les boutons de tailles intermédiaires sont donc déduits par le procédé selon l'invention.

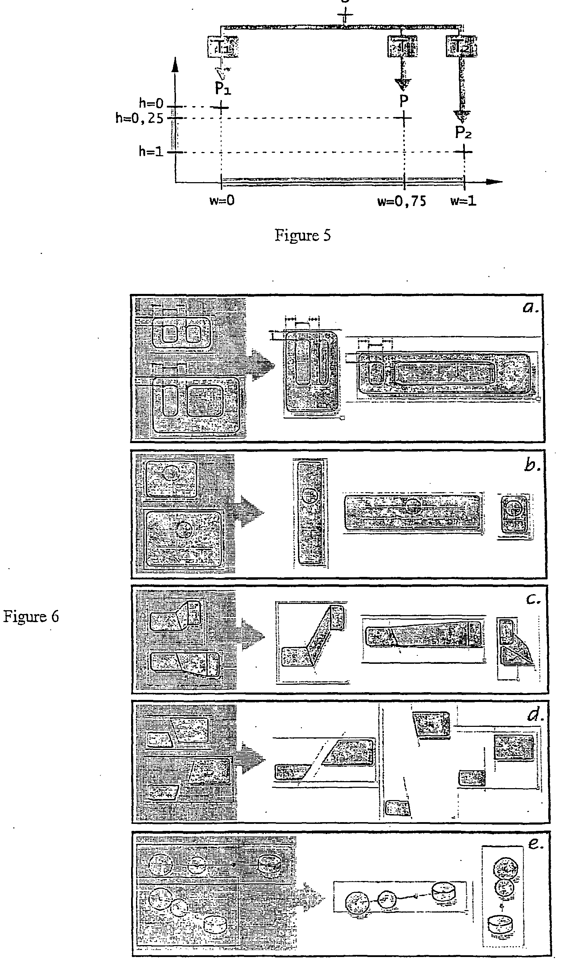

Le schéma de la figure 5 illustre une interprétation géométrique de l'interpolation orthogonale. L'axe des ordonnées représente la hauteur h, alors que l'axe des abscisses représente la largeur w. Sur ce schéma, on a appliqué une transformation intermédiaire T à un point O, avec

$$\dot{T} = I_{((o,o),T1),((1,1),T2)}^{orth}(0.75,0.25)$$

T1 et T2 sont deux reproductions dont les matrices de transformation affine.

P1, P2 et P sont des points obtenus par transformation d'un même point du plan via T1, T2 et la transformation intermédiaire $I_{T1,T2}$ respectivement. La méthode reste vraie lorsque les transformations intermédiaires sont appliquées à des formes ou des tuples de points : calculer une transformation $I_{T1,T2}$ interpolée avant de l'appliquer à un tuple de points est identique à appliquer les deux transformations T1 et T2 puis une interpolation sur chaque point comme décrit ci-dessus.

L'interpolation orthogonale peut aussi s'appliquer à des graphismes comportant plusieurs formes, chacune ayant sa propre transformation. Soit deux tuples de formes $\left(S_1^1,...,S_1^n\right)$ et $\left(S_2^1,...,S_2^n\right)$ obtenus après avoir appliqué $\left(T_1^1,...,T_1^n\right)$ et $\left(T_2^1,...,T_2^n\right)$ à un tuple de formes initial. L'interpolation orthogonale peut facilement se généraliser à des tuples de transformations en réalisant une interpolation sur chaque paire $\left(T_1^i,T_2^n\right)$ de façon séparée. Des objets composites intermédiaires peuvent encore être obtenus par une interpolation directe de chaque paire de points $\left(P_2^i,P_2^i\right)$, avec $\left(P_1^1,...,P_1^m\right)$ et $\left(P_2^1,...,P_2^m\right)$ étant tous les points obtenus en décomposant les formes $\left(S_1^1,...,S_1^n\right)$ et $\left(S_2^1,...,S_2^n\right)$.

Sur la figure 6 sont représentées des transformations d'un ensemble de graphismes vers d'autres graphismes de façon à mettre en évidence les propriétés conservatives de l'interpolation orthogonal.

Une propriété conservative pour l'interpolation orthogonale est une propriété géométrique qui, si vérifiée sur deux tuples de formes obtenus après application de $\left(T_1^1,...,T_1^n\right)$ et $\left(T_2^1,...,T_2^n\right)$, est encore vérifiée sur n'importe lequel des tuples intermédiaires obtenus par interpolation orthogonale. Des propriétés conservatives intéressantes peuvent être déduites de la propriété dite d'indépendance structurelle, et du fait que, comme pour des transformations affines, l'interpolation orthogonale conserve les combinaisons affines des points. Certaines de ces propriétés sont (voir la figure 6) :

Figure 6a. Conservation des mesures algébriques projetées. Si une fois projeté sur un axe donné, un vecteur a la même mesure algébrique sur les deux exemples, alors cette valeur restera constante. En conséquence, les distances "horizontale" et "verticale" sont préservées, à condition que les points soient gardés du même côté l'un de l'autre. Ceci permet des spécifications des bordures et des marges.

Figure 6b. Conservation des rapports relatifs. Si trois points sont alignés par le même rapport de distance sur les deux exemples, alors ils demeureront alignés et le rapport de distance demeurera le même. Par conséquent, des points médians sont préservés. Cette propriété est utile dans la mesure où des rapports constants semblent être utilisés par les graphistes.

Figure 6c. Conservation des sommets confondus. Si deux points coïncident sur les deux exemples, alors ils coïncideront toujours. Par conséquent, deux formes qui se réunissent par la même paire de points sur chaque exemple demeureront en contact. Ceci permet la spécification des relations d'incidence entre différentes primitives graphiques.

Figure 6d. Conservation de parallélisme. Si deux lignes sont parallèles sur les deux exemples, alors elles seront toujours parallèles. Les graphistes peuvent en particulier s'attendre à cet invariant pour les lignes horizontales et verticales, même si cela reste vrai pour n'importe quelle orientation. Les parallélogrammes sont également préservés, ainsi que les rectangles parallèles aux axes principaux.

Figure 6e. La conservation des combinaisons affines. On peut noter que l'alignement est une propriété conservative seulement si la combinaison affine est respectée.

Les techniques décrites dans la présente invention peuvent être mises en oeuvre dans des outils de dessins conventionnels de l'homme du métier.

Bien sûr, l'invention n'est pas limitée aux exemples qui viennent d'être décrits et de nombreux aménagements peuvent être apportés à ces exemples sans sortir du cadre de l'invention.

**Revendications**

1.  Procédé pour redimensionner un objet graphique structuré comprenant des primitives graphiques, de façon à obtenir un objet graphique intermédiaire de taille différente, ce procédé comprenant les étapes suivantes :

    - élaboration d'une pluralité de reproductions dudit objet graphique, chaque reproduction présentant un dimensionnement donné,
    - extraction d'un ensemble de matrices de transformation affine pour chaque reproduction, une matrice de transformation affine par primitive graphique,
    - application d'une interpolation orthogonale sur les matrices de transformations affines de façon à déduire des matrices intermédiaires de transformation affine pour tout objet graphique intermédiaire de taille différente de celle desdites reproductions; ladite interpolation orthogonale consistant en une interpolation séparée de la première ligne des matrices de transformation selon au moins la largeur, et de la deuxième ligne des matrices de transformation selon au moins la hauteur; et
    - déduction des caractéristiques géométriques dudit objet graphique intermédiaire à partir des matrices intermédiaires.

2.  Procédé selon la revendication 1, **caractérisé en ce que** ladite interpolation est de type linéaire par morceaux.

3.  Procédé selon l'une quelconque des revendications précédentes, **caractérisé en ce que** pour deux reproductions dont les matrices de transformation affine sont T1 et T2, et $I_{T1,T2}$ un interpolant orthogonal permettant de générer une famille de matrices de transformations intermédiaires; et pour P1, P2 et P des points obtenus par transformation d'un même point du plan via T1, T2 et $I_{T1,T2}$ respectivement, alors on déduit P(x,y) à partir de P1(x1,y1) et P2(x2,y2) en utilisant la formule suivante :

$$P(x, y) = (I^{lin}_{(w1,x1),(w2,x2)}(w), I^{lin}_{(h1,y1),(h2,y2)}(h))$$

avec

$$I_{T1,T2} = I^{orth}_{(w1,h1,T1),(w2,h2,T2)}$$ , c'est à dire une interpolation orthogonale ayant comme variable des matrices T, des largeurs w et des hauteurs h.

4.  Procédé selon la revendication 1, **caractérisé en ce que** ladite interpolation est de type polynomial.

**Claims**

1.  Method for resizing a structured graphic object comprising graphic primitives so as to obtain an intermediate graphic object with a different size, this method comprising the following steps:

    - production of a plurality of reproductions of said graphic object, each reproduction having a given dimensioning,
    - extraction of a set of affine transformation matrices for each reproduction, one affine transformation matrix per graphic primitive,
    - application of an orthogonal interpolation onto the affine transformation matrices so as to deduce the intermediate affine transformation matrices for any intermediate graphic object with a size different from that of said reproductions; said orthogonal interpolation consisting of a separate interpolation of the first line of the transformation matrices along at least the width, and of the second line of the transformation matrices along at least the height; and
    - deduction of the geometric characteristics of said intermediate graphic object from the intermediate matrices.

2.  Method according to claim 1, **characterized in that** said interpolation is of piecewise linear type.

3. Method according to any one of the previous claims, **characterized in that** for two reproductions the affine transformation matrices of which are T1 and T2, and $I_{T1,T2}$ an orthogonal interpolant making it possible to generate a family of intermediate transformation matrices; and for P1, P2 and P, points obtained by transformation of a single point of the plane via T1, T2 and $I_{T1,T2}$ respectively, then P(x,y) is deduced from P1(x1,y1) and P2(x2,y2) by using the following formula:

$$P(x, y) = (I^{lin}_{(w1,x1),(w2,x2)}(w), I^{lin}_{(h1,y1),(h2,y2)}(h))$$

with $I_{T1,T2} = I^{orth}_{(w1,h1,T1),(w2,h2,T2)}$ i.e. an orthogonal interpolation having matrices T, widths w and heights h as variables.

4. Method according to claim 1, **characterized in that** said interpolation is of polynomial type.

**Patentansprüche**

1. Verfahren zur Maßstabsänderung eines strukturierten grafischen Objekts mit grafischen Primitiven, um ein grafisches Zwischenobjekt anderer Größe zu erhalten, wobei dieses Verfahren die folgenden Schritte umfasst:

- Erstellen einer Vielzahl von Reproduktionen des grafischen Objekts, wobei jede Reproduktion eine vorgegebene Dimensionierung aufweist,
- Extrahieren einer Einheit von affinen Transformationsmatrizen für jede Reproduktion, eine affine Transformationsmatrix pro grafischem Primitiv,
- Anwenden einer orthogonalen Interpolation auf die affinen Transformationsmatrizen, um affine Transformationszwischenmatrizen für jedes grafische Zwischenobjekt mit einer anderen Größe als die Reproduktionen abzuleiten, wobei die orthogonale Interpolation in einer getrennten Interpolation der ersten Zeile der Transformationsmatrizen entlang wenigstens der Breite und der zweiten Zeile der Transformationsmatrizen entlang wenigstens der Höhe besteht, und
- Ableiten der geometrischen Merkmale des grafischen Zwischenobjekts aus den Zwischenmatrizen.

2. Verfahren nach Anspruch 1, **dadurch gekennzeichnet, dass** die Interpolation vom Typ stückweise lineare Interpolation ist.

3. Verfahren nach einem der vorhergehenden Ansprüche, **dadurch gekennzeichnet, dass** bei zwei Reproduktionen, deren affine Transformationsmatrizen T1 und T2 sind, und $I_{T1,T2}$, einer orthogonalen Interpolierenden, die ermöglicht, eine Familie von Transformationszwischenmatrizen zu generieren, und bei P1, P2 und P, Punkten, die durch Transformation eines gleichen Punktes der Ebene über T1, T2 bzw. $I_{T1,T2}$ erhalten werden, P(x,y) dann aus P1 (x1,y1) und P2(x2,y2) unter Verwendung der folgenden Formel abgeleitet wird:

$$P(x, y) = (I^{lin}_{(w1,x1),(w2,x2)}(w), I^{lin}_{(h1,y1),(h2,y2)}(h)).$$

mit

$$I_{T1,T2} = I^{orth}_{(w1,h1,T1),(w2,h2,T2)}$$

, das heißt einer orthogonalen Interpolation, die als Variable Matrizen T, Breiten w und Höhen h hat.

4. Verfahren nach Anspruch 1, **dadurch gekennzeichnet, dass** die Interpolation vom Typ Polynominterpolation ist.

Figure 1

Figure 2

Figure 3a

a.

Figure 3b

b.

Figure 3c

c.

relâché

pressé

masque

Figure 4

Figure 5

Figure 6

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- Revisiting visual interface programming: Creating GUI tools for designers and programmers. **S. CHATTY ; S. SIRE ; J. VINOT ; P. LECOANET ; C. MERTZ ; A. LEMORT.** Proceedings of the AC-MUIST. Addison-Wesley, Octobre 2004, 267-276

- **D. KURLANDER ; S. FEINER.** Inferring constraints from multiple snapshots. *ACM Trans. Graph.,* 1993, vol. 12 (4), 277-304